# EUROPÄISCHE PATENTSCHRIFT

(11) **EP 3 814 273 B1**
(45) Veröffentlichungstag und Bekanntmachung des Hinweises auf die Patenterteilung: **03.08.2022**
(21) Anmeldenummer: 19735513.4
(22) Anmeldetag: 25.06.2019
(51) Int. Cl.: C01B 3/34, C01B 3/38, F16L 53/34, F16L 53/35, F16L 53/38

(54) **VERFAHREN ZUR BEREITSTELLUNG VON SYNTHESEGAS MIT HILFE EINER ZUSÄTZLICHEN ELEKTRISCHEN HEIZUNG**
METHOD FOR PROVIDING SYNTHESIS GAS BY MEANS OF AN ADDITIONAL ELECTRIC HEATER
PROCÉDÉ DE PRÉPARATION DE GAZ DE SYNTHÈSE À L'AIDE D'UN CHAUFFAGE ÉLECTRIQUE ADDITIONNEL

(30) Priorität: 26.06.2018 DE 102018210409; 10.08.2018 DE 102018213463
(43) Veröffentlichungstag der Anmeldung: 05.05.2021
(73) Patentinhaber: thyssenkrupp Industrial Solutions AG, 45143 Essen (DE); thyssenkrupp AG, 45143 Essen (DE)
(72) Erfinder: MAI, Martin, 44135 Dortmund (DE); NÖLKER, Klaus, 44265 Dortmund (DE); KEIL, Bernd, 44141 Dortmund (DE); EL HAWARY, Tarek, 59439 Holzwickede (DE)
(74) Vertreter: thyssenkrupp Intellectual Property GmbH
(86) Internationale Anmeldenummer: PCT/EP2019/066857
(87) Internationale Veröffentlichungsnummer: WO 2020/002346

(56) Entgegenhaltungen:
- EP-A1- 3 075 705
- WO-A1-2016/070989
- DE-A1-102015 013 071
- KELLING R ET AL: "Ceramic counterflow reactor for autothermal dry reforming at high temperatures", CATALYSIS TODAY, ELSEVIER, AMSTERDAM, NL, Bd. 273, 29. März 2016 (2016-03-29), Seiten 196-204, XP029580136, ISSN: 0920-5861, DOI: 10.1016/J.CATTOD.2016.02.056

## Beschreibung

Die Erfindung betrifft ein Reformer zur Dampfreformierung eines kohlenwasserstoffhaltigen Gemisches, eine Anlage zur Ammoniaksynthese, Wasserstoffsynthese, Methanolsynthese und/oder als Ammoniaksynthese-Harnstoffsynthesekomplex, ein Verfahren zur Herstellung von Synthesegas und die Verwendung des erfindungsgemäßen Reformers zur Herstellung eines Synthesegasgemisches.

Ammoniak ist die weltweit zweitmeist produzierte synthetische Chemikalie (Ullmannn's Encyclopedia of Industrial Chemistry, 2012, Wiley-VCH Verlag GmbH &Co. KGaA, Weinheim, DO1:10.1002/14356007.o02_o11, im folgenden "Ullmann's").

Die Herstellung von Ammoniak erfolgt dabei im Wesentlichen aus den Elementen Wasserstoff und Stickstoff und einen Eisenkatalysator. Die Temperaturen bewegen sich häufig im Bereich zwischen 400 °C und 500 °C und bei einem Druck über 100 bar. Der wesentliche Faktor für die Prozesskosten liegen dabei in der Bereitstellung von Wasserstoff aus der Synthesegas Herstellung (Ullmann's, Seite 139).

Eine Erzeugung von Ammoniak erfolgt dementsprechend bevorzugt im Grundsatz wie beispielsweise bei Holleman, Wiberg, Lehrbuch der Anorganischen Chemie, 102 Auflage, 2007, Seiten 662-665 (ISBN 978-3-11-017770-1) beschrieben, basierend auf dem "Haber-Bosch-Verfahren" aus den Elementen gemäß Gleichung [1]:

3 H₂ + N₂ ⇄ 2 NH₃ + 92.28 kJ [1]

Das Edukt Stickstoff (N₂) kann beispielsweise durch Tieftemperaturluftzerlegung oder durch Reduktion von Sauerstoff in der Luft durch Verbrennung gewonnen werden. Der Wasserstoff wird bevorzugt über den "Steam-Reforming-Prozess" gemäß Gleichung [2] erhalten:

CₙH₂m + nH₂O ⇄ (n+m) H₂ + nCO [2]

In der anschließenden "Kohlendioxid-Konvertierung" erfolgt eine weitere Umsetzung gemäß Gleichung (3):

CO + H₂O ⇄ CO₂ + H₂ [3]

Das gemäß Gleichung [3] entstehende Kohlendioxid (CO₂) dient bevorzugt als Kohlendioxidquelle zur Harnstoffsynthese gemäß den Gleichungen [4] und [5].

2 NH₃ + CO₂ ⇄ H₂N-COONH₄ [4]

H₂N-COONH₄ ⇄ (NH₂)₂CO + H₂O [5]

Im Primärreformer wird in der endothermen Reformierungsreaktion Methan mit Hilfe von Wasserdampf in Wasserstoff und Kohlenstoffmonoxid (sowie zum Teil CO₂) gespalten. Es ist im Stand der Technik üblich, dass die notwendige Energie zur Erwärmung des Katalysators/Gas/Wasserdampf-Gemisches ausschließlich über die Reformerbrenner erfolgt. Die Reformerbrenner übertragen durch das Verbrennen des Luft/Erdgas Gemisches die Wärme mittels Wärmestrahlung an die Reformerrohraußenwände. Diese übertragen die Wärme anschließend mittels Wärmeleitung an den Katalysator und nachfolgend durch Konvektion an das /Gas/Wasserdampf- Gemisch. Erhebliche Nachteile des Systems sind die Kompromisse zwischen der maximal möglichen Wärmeeinbringung (Verschleiß Treiber) und der notwendigen Wärmeeinbringung. Eine zu geringe Wärmeeinbringung bewirkt, dass ein Teil des Wasser Erdgas Gemisches nicht katalytisch reagiert, den sogenannten "Methanschlupf" .

In der Praxis ist der Anlagenbetreiber aber stets bestrebt, die Reformerbrenner unter Volllast laufen zu lassen, um möglichst viel Synthesegas zu produzieren. Diese Arbeitsweise kann wiederum die Lebensdauer der Reformerrohre erheblich reduzieren. Zudem ist das Katalysatorvolumen eines Reformerrohres durch den maximal möglichen Rohrinnendurchmesser der Reformerrohre sowie durch die Art und Quantität der einseitigen Wärmeeinbringung limitiert. Ein großer Rohrdurchmesser ermöglicht es, mehr Katalysator pro Reformerrohr unterzubringen, jedoch erreicht dann die vorhandene Wärme nicht mehr vollständig den inneren Katalysator nahe der Rohrachse.

Das Erdgas wird zudem für zweierlei Zwecke verwendet. Es dient zum einen als Heizgas für den endothermen Dampfreformierungsprozess sowie zum anderen auch als Wasserstofflieferant für die Synthesegasherstellung. Langfristig ist dies problematisch, da fossile Brennstoffe endlich und mit steigenden Kosten verbunden sind. Erschwerend kommt hinzu, dass bei der Befeuerung des Primärreformers mit Erdgas CO₂ und Stickoxide emittiert werden. Zukünftige Emissionsgrenzen können dann, sofern die Anlagen nicht über dezidierte Elemente zur Luftreinigung verfügen, was in den seltensten Fällen gegeben ist, zu einem Problem für Chemieanlagen werden. Diese Problematik ist daher mit zusätzlichen Investitionsund Betriebskosten verbunden.

EP 1 055 637 A1 offenbart ein Verfahren zur Herstellung eines Synthesegasstromes reich an Kohlenmonoxid und Wasserstoff, wobei ein Katalysator in einer porösen Trägerstruktur verwendet wird.

EP 3 075 705 A1 offenbart ein Verfahren und eine Anlage zur Dampfreformierung wobei zumindest ein Teil des Einsatzstromes außerhalb des ersten Dampfreformers zumindest zum Teil unter Einsatz elektrischer Energie erwärmt wird.

EP 0 830 893 A1 offenbart einen Katalysatoreinsatz für die Reformierung kohlenwasserstoffhaltiger Dampfgemische.

DE 10 2015 013 071 A1 offenbart einen Ofen zur Dampfreformierung eines kohlenwasserstoffhaltigen Einsatzstromes wobei an einem Rohrabschnitt ein Induktor zur induktiven Beheizung angebracht ist.

Die vorliegende Erfindung hat die Aufgabe einen Reformer bereitzustellen, welcher flexibel in Abhängigkeit des wechselnden Energieangebots beheizbar ist und gleichzeitig die Reformerkomponenten einer möglichst niedrigen Materialbelastung aussetzt.

Die Aufgabe der Erfindung wird überraschenderweise durch einen Reformer zur Dampfreformierung eines kohlenwasserstoffhaltigen Gemisches gemäß Anspruch 1 gelöst. Weitere vorteilhafte Ausgestaltungen finden sich in den abhängigen Ansprüchen.

Die Erfindung umfasst außerdem eine Anlage zur Ammoniaksynthese, Wasserstoffsynthese, Methanolsynthese und/oder als Ammoniaksynthese-Harnstoffsynthesekomplex.

Die Erfindung umfasst des Weiteren ein Verfahren zur Herstellung von Synthesegas. Weitere vorteilhafte Ausgestaltungen finden sich in den jeweiligen abhängigen Ansprüchen.

Die Erfindung umfasst des Weiteren die Verwendung der erfindungsgemäßen Anlage zur Herstellung eines Synthesegasgemisches in der Ammoniak-Synthese.

Der erfindungsgemäße Reformer zur Dampfreformierung eines kohlenwasserstoffhaltigen Gemisches umfasst mindestens die folgenden Komponenten.

Der Grundsätzliche Aufbau eines Reformers zur Bereitstellung von Wasserstoff, bevorzugt ein Primär- und ein Sekundärreformer und/oder eines autothermer Reformer, ist dabei dem Fachmann bekannt. Die Bildung von Wasserstoff erfolgt dabei im Grundsatz nach obiger Gleichung [2]

CₙH₂m + nH₂O ⇄ (n+m) H₂ + nCO [2]

Eine Darstellung zur Funktionsweise des Reformers findet sich beispielsweise in Ullmann's, Kapitel 6.1.1, Seiten 174 bis 179. Der Reformer umfasst eine Brennkammer und mindestens einen innerhalb der Brennkammer angeordneten Brenner. Ein erstes Reaktorrohr ist mindestens abschnittsweise innerhalb Brennkammer angeordnet. Der Ausdruck "mindestens abschnittsweise" bedeutet im Sinne der Erfindung, dass zumindest ein Teil oder der ganze Teil des ersten Reaktorrohrs innerhalb der Brennkammer verläuft. Im Regelfall passiert nur ein Teilabschnitt des ersten Reaktorrohres die Brennkammer, d.h. das erste Reaktorrohr wird in die Brennkammer hineingeführt und anschließend aus der Brennkammer hinausgeführt. Innerhalb des ersten Reaktorrohrs ist ein Katalysator, beispielsweise auf Basis von Nickel Oxid auf einem Trägermaterial, angeordnet. Der erfindungsgemäße Reformer ist dadurch gekennzeichnet, dass ein elektrisch beheizbares Heizelement innerhalb des ersten Reaktorrohrs angeordnet ist. Die Reformerrohre stehen unter einem inneren Überdruck. Da die Zugfestigkeit von Stahl mit zunehmender Außenwandtemperatur des Rohres stark abnimmt, gibt es eine Obergrenze für die Wärmestromdichte an der Außen- und Innenwand des Rohres. Wird diese Obergrenze überschritten, so sinkt die Lebensdauer des Rohres rasch ab. Durch das erfindungsgemäß zusätzliche innere elektrisch beheizbares Heizelement kann die Einschränkung hinsichtlich der Innenwand- und Außenwanddurchmesser aufgehoben werden, die Stand heute, limitiert durch die maximal mögliche Wärmeeinbringung ist und stets unter der Berücksichtigung von Druck/Temperatur/Verschleiß ausgelegt werden muss. Die Erfindung ermöglicht daher ein verbessertes Temperaturprofil über den Querschnitt der Katalysatorschüttung. Der Katalysator wird also besser ausgenutzt und verringert somit den Methanschlupf bei einer geringeren äußeren thermischen Belastung der Reformerrohre.

Bevorzugt ist zusätzlich ein zweites Reaktorrohr mit einen innerhalb des zweiten Reaktorrohrs angeordneten Katalysator ohne ein wie voranstehend beschriebenes elektrisch beheizbares Heizelement vorgesehen. Die Erfindung umfasst somit auch die Kombination aus ersten Reaktorrohren mit elektrischen Heizelementen und zweiten Reaktorrohren ohne elektrische Heizelementen.

In einer bevorzugten Ausgestaltung weist das erste Reformerrohr im Bereich des elektrisch beheizbaren Heizelements Ausbuchtungen oder Verengungen auf. Diese Ausbuchtungen oder Verengungen ermöglichen eine individuell einstellbare Beheizung einzelner Abschnitte der ersten Reformerrohre.

Das elektrisch beheizbare Heizelement umfasst bevorzugt ein induktiv beheizbares Heizelement. Der Ausdruck "induktiv beheizbar" umfasst bevorzugt im Sinne der Erfindung "das Heizen elektrisch leitfähiger Materialien durch induzierte hochfrequente Ströme innerhalb des Materials" (Dictionary of Science and Technology, edt. Christopher Morres, 1992, S. 1101, ISBN: 0-12-200400-0). Besonders bevorzugt weist das induktiv beheizbares Heizelement mindestens ein Heizrohr (beispielsweise enthaltend Keramiken, Glas und/oder Metalle) und einen zumindest abschnittsweise um das Heizrohr (6) gewickelten metallischen Draht und/oder eine metallische Beschichtung (7b), besonders bevorzugt in Form von spulenförmigen Leiterbahnen, auf. Der metallische Draht und/oder die metallische Beschichtung sind bevorzugt mit einer elektrischen Wechselstromquelle verbunden.

Bevorzugt weist das Heizrohr eine zumindest abschnittsweise metallische Oberfläche auf. Die metallische Oberfläche verbessert die Wärmeleitung vom Heizrohr in das Katalysatorbett des ersten Reaktorrohrs.

Insbesondere bevorzugt liegt der metallische (elektrisch leitfähige) Draht über Einkerbungen auf dem Heizrohr an. Die Einkerbungen verbessern die Befestigung, "Haftung" des metallischen Drahtes an dem Heizrohr.

Bevorzugt liegt das Verhältnis vom Durchmesser des ersten Reaktorrohres Ø₂ₐ zum Durchmesser des Heizrohres Ø₆ ausgedrückt als Ø₂ₐ/Ø₆ bei 100 bis 2, bevorzugt 10 bis 5.

In einer bevorzugten Ausführungsform umfasst der metallische Draht und/oder die metallischen Oberfläche und/oder die metallische Beschichtung Eisen, Kobalt, Nickel, Kupfer, Silber, Chrom, sowie als auch Halbmetalle wie Graphit, Silizium und keramische Beschichtungen.

Der metallischen Draht und/oder die metallische Beschichtung sind bevorzugt mit einer elektrischen Wechselstromquelle verbunden.

Das elektrische Heizelement umfasst ein elektrisches Widerstandsheizelement.

Dieses umfasst bevorzugt einen Ohm'schen Widerstand und kann beispielsweise in Form eines Metalldrahtes oder Metallplatte ausgeführt sein. Der elektrische Widerstand kann sowohl an eine Wechselstromquelle als auch an eine Gleichstromquelle angeschlossen sein. Die beim Stromfluss durch den elektrischen Widerstand freiwerdende Wärme wird zur Erwärmung des elektrischen Widerstandsheizelement sowie des umgegebenen Katalysatorbettes genutzt. Durch das erfindungsgemäß zusätzliche innere elektrisch beheizbares Heizelement kann die Einschränkung hinsichtlich der Innenwand- und Außenwanddurchmesser aufgehoben werden, die Stand heute, limitiert durch die maximal mögliche Wärmeeinbringung ist und stets unter der Berücksichtigung von Druck/Temperatur/Verschleiß ausgelegt werden muss. Die Erfindung ermöglicht daher ein verbessertes Temperaturprofil über den Querschnitt der Katalysatorschüttung. Der Katalysator wird also besser ausgenutzt und verringert somit den Methanschlupf bei einer geringeren äußeren thermischen Belastung der Reformerrohre.

Besonders bevorzugt umfasst das elektrische Widerstandsheizelement einen elektrischen Heizwiderstand und einen Heizmantel. Der elektrische Heizwiderstand umfasst bevorzugt metallische Leiter. Die Wärmeabgabe erfolgt dabei entsprechend dem materialspezifischen Widerstand. Der elektrische Heizwiderstand, beispielsweise in Form einer Metallplatte oder einer metallbeschichteten Keramikplatte, ist von einem Heizmantel umgegeben. Der Heizmantel, beispielsweise umfassend geeignete keramische Materialien, verhindert einen direkten Kontakt mit dem Katalysatorbett und das Auftreten von "hot-spots" am Katalysator. Der Ausdruck "geeignete keramische Materialien" umfasst bevorzugt dem Fachmann bekannte keramische Materialien oder Materialgemische mit keramischen Anteilen, welche bei den Betriebstemperaturen des Reformers stabil sind oder nur einen geringen Materialverschleiß haben. Beispielhafte Keramiken können Al₂O₃, MgO, ZrO₂, Aluminiumtitanate, Silicide, Carbide, Nitride, usw. enthalten.

Bevorzugt umfasst der Heizmantel elektrische Isolatoren, bevorzugt Oxidkeramiken und/oder Nichtoxidkeramiken.

In einer weiteren Ausgestaltung umfasst das elektrische Widerstandsheizelement (5b) einen ersten elektrischen Heizwiderstand und einen zweiten Heizwiderstand umfasst, besonders bevorzugt weitere Heizwiderstände. Der erste elektrische Heizwiderstand und der zweite elektrische Heizwiderstand können unterschiedlich dimensioniert sein. Hierunter fallen beispielsweise unterschiedliche Längen und Durchmesser oder auch die Anordnung der elektrischen Heizwiderstände im elektrischen Widerstandsheizelement. Über diese Anordnung können unterschiedliche und abstimmbare Heizleistungen des elektrischen Widerstandsheizelements erreicht werden.

Bevorzugt umfasst der Katalysator einen ferromagnetischen Katalysator, bevorzugt Eisen, Kobalt, Nickel und/oder Verbindungen und/oder Gemische davon. Die Verwendung eines ferromagnetischen Katalysators ermöglicht eine direkte Erwärmung und somit bessere Temperaturverteilung des Katalysators im Heizrohr und dem darin erzeugten elektromagnetischen Induktionsfeldes.

Die Erfindung umfasst des Weiteren eine Anlage zur Ammoniaksynthese, Wasserstoffsynthese, Methanolsynthese und/oder als Ammoniaksynthese-Harnstoffsynthesekomplex umfassend einen wie voranstehend beschriebenen erfindungsgemäßen Reformer.

Weiterhin umfasst die Erfindung ein Verfahren zur Herstellung von Synthesegas mindestens umfassend die folgenden Schritte. In einem ersten Schritt a) wird ein kohlenwasserstoffhaltiges Ausgangsgemisches, insbesondere Erdgas, und Wasserdampf bereitgestellt. In einen folgenden Schritt b) wird ein wie voranstehend beschriebener Reformer mit dem bereitgestellten kohlenwasserstoffhaltigen Ausgangsgemisches und Wasserdampf beaufschlagt. Die grundsätzlichen Prozessbedingungen finden sich beispielsweise bei in Ullmann's, Kapitel 6.1.1, Seiten 174 bis 179. Anschließend wird in Schritt c) ein Synthesegasgemisch, bevorzugt ein Synthesegasgemisch umfassend die Komponenten nach Gleichung [2], erhalten. Das Verfahren eignet sich zur Anwendung in Anlagen zur Ammoniaksynthese, Wasserstoffsynthese, Methanolsynthese und in Ammoniak-Harnstoffsynthesekomplexen (d.h. kombinierte Anlagen zur Synthese von sowohl Ammoniak und optional Kohlendioxid sowie zur Synthese von Harnstoff aus Ammoniak und Kohlendioxid).

Bevorzugt erfolgt das Beaufschlagen in Schritt b) bei einer Temperatur von 300 °C bis 700°C und einem Druck von 20 Bar bis 50 bar.

Die Erfindung umfasst des Weiteren die Verwendung des erfindungsgemäßen Reformers zur Herstellung eines Synthesegasgemisches.

Des Weiteren wird die Erfindung anhand der folgenden Figuren näher erläutert. Die Figuren beschränken dabei nicht den Schutzumfang der Erfindung, sondern dienen nur der beispielhaften Erläuterung. Die Figuren sind nicht maßstabsgetreu.

Es zeigen:
Figur 1 eine schematische Zeichnung des erfindungsgemäßen Reformers zur Dampfreformierung eines kohlenwasserstoffhaltigen Gemisches,
Figur 2 eine schematische Zeichnung des erfindungsgemäßen ersten Reaktorrohrs,
Figur 3 einen vergrößerten Ausschnitt des ersten Reaktorrohrs,
Figur 4 einen vergrößerten Ausschnitt des elektrisches Widerstandsheizelements,
Figur 5 eine schematische Zeichnung einer weiteren Ausgestaltung des erfindungsgemäßen ersten Reaktorrohrs,
Figur 6 einen vergrößerten Ausschnitt eines bevorzugten elektrischen Widerstandsheizelements und
Figur 7 eine schematische Zeichnung eines bevorzugten ersten Reaktorrohrs.

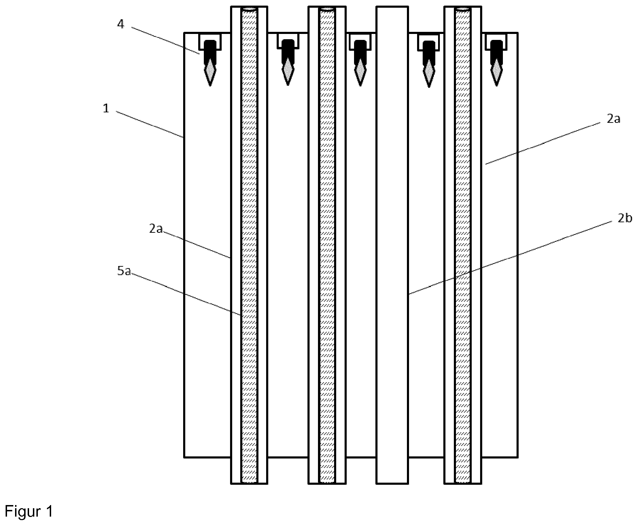

Figur 1 zeigt eine schematische Zeichnung des erfindungsgemäßen Reformers zur Dampfreformierung eines kohlenwasserstoffhaltigen Gemisches. Der Reformer umfasst eine Brennkammer (1) und innerhalb der Brennkammer angeordnete Brenner (4). Ein erstes Reaktorrohr (2a) ist mindestens abschnittsweise innerhalb der Brennkammer (1) angeordnet. Der Ausdruck "mindestens abschnittsweise" bedeutet im Sinne der Erfindung, dass zumindest ein Teil oder der ganze Teil des ersten Reaktorrohrs innerhalb der Brennkammer (1) verläuft. Innerhalb des ersten Reaktorrohrs (2a) ist ein nicht gezeigter Katalysator (3) angeordnet. Zudem ist ein elektrisch induktiv beheizbares Heizelement (5a) innerhalb des ersten Reaktorrohrs (2a) angeordnet. Des Weiteren können zusätzlich zweite Reaktorrohre (2b) mit nicht gezeigten Katalysator (3) vorgesehen sein, welche beispielsweise aus Kostengründen oder zur Temperaturkontrolle kein induktiv beheizbares Heizelement (5a) beinhalten.

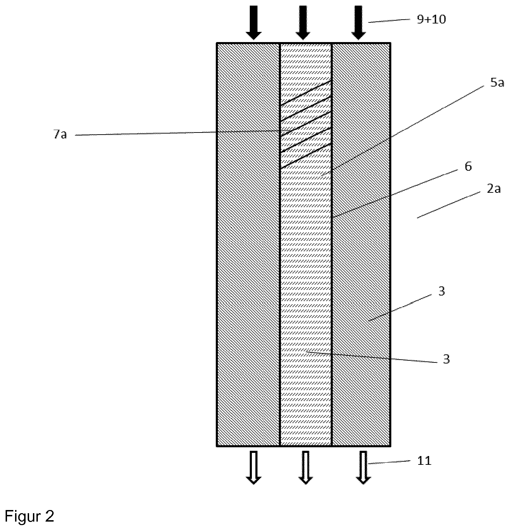

Figur 2 zeigt eine schematische Zeichnung des erfindungsgemäßen ersten Reaktorrohrs (2a). Innerhalb des ersten Reaktorrohrs (2a) befindet sich ein Katalysator (3) und ein induktiv beheizbares Heizelement (5a). Das induktiv beheizbare Heizelement (5a) umfasst ein Heizrohr (6), einen zumindest abschnittsweise um das Heizrohr (6) spulenförmig gewickelten metallischen Draht (7a) (oder metallische Beschichtung (7b)) und kann ebenfalls mit dem Katalysator (3) befüllt sein. Grundsätzlich können die Katalysatoren (3) innerhalb des induktiv beheizbaren Heizelements (5a) und innerhalb des Zwischenraumes zwischen dem induktiv beheizbaren Heizelements (5a) und dem Innenraum des ersten Reaktorrohrs (2a) identisch oder auch verschieden sein. Der spulenförmig um das Heizrohr (6) gewickelten metallischen Draht (7a) ist mit einer nicht gezeigten Wechselstromquelle verbunden. Die Erwärmung des Heizrohres (6) über den gewickelten metallischen Draht (7a) ermöglicht eine Erwärmung des ersten Reaktorrohrs (2a) von innen und senkt somit die Materialspannungen durch den gleichzeitigen Wärmeeintrag der Brenner (4). Eine kohlenwasserstoffhaltiges Ausgangsgemisches (9) und Wasserdampf (10) treten in das erste Reaktorrohr (2a) ein und verlassen das erste Reaktorrohr (2a) als Synthesegasgemisch (11).

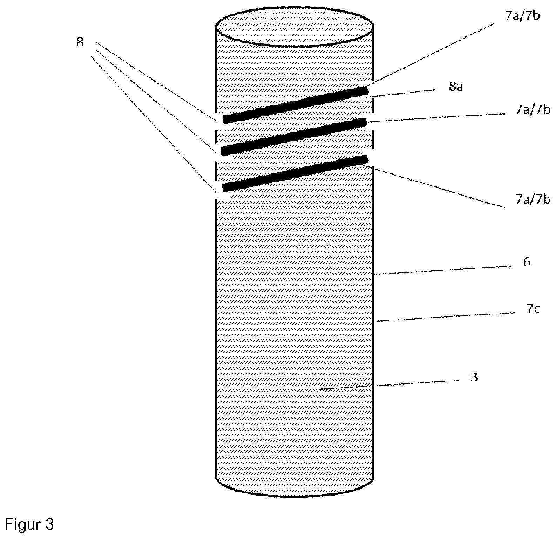

Figur 3 zeigt einen vergrößerten Ausschnitt des ersten Reaktorrohrs (2a). Das Heizrohr (6) ist (optional) mit Katalysator (3) gefüllt und weist zumindest abschnittsweise zur besseren Wärmeleitung eine (wärmeleitende) metallische Beschichtung (7c) auf. Der spulenförmig um das Heizrohr (6) gewickelten metallischen Draht (7a) ist mit einer nicht gezeigten Wechselstromquelle verbunden. Einkerbungen(8) im Heizrohr (6) verbessern den Halt des metallischen Drahtes (7a) auf der Oberfläche des Heizrohres, zusätzlich ist hierdurch eine plane Oberfläche (8a) geschaffen, die eine verbesserte Wärmeübertragung mittels Wärmeleitung ermöglicht.

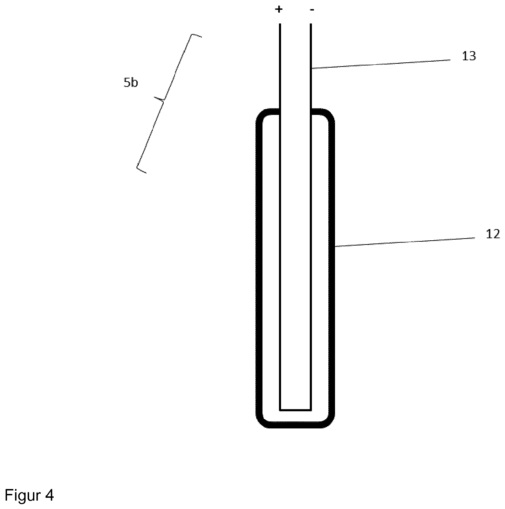

Figur 4 zeigt einen vergrößerten Ausschnitt des elektrischen Widerstandsheizelements (5b). Das elektrische Widerstandsheizelement (5b) umfasst einen elektrischen Heizwiderstand (13) und einen Heizmantel (12). Der elektrische Heizwiderstand (13) kann mit einer Gleichstromquelle (angedeutet durch + -) oder einer nicht gezeigten Wechselstromquelle elektrisch verbunden sein.

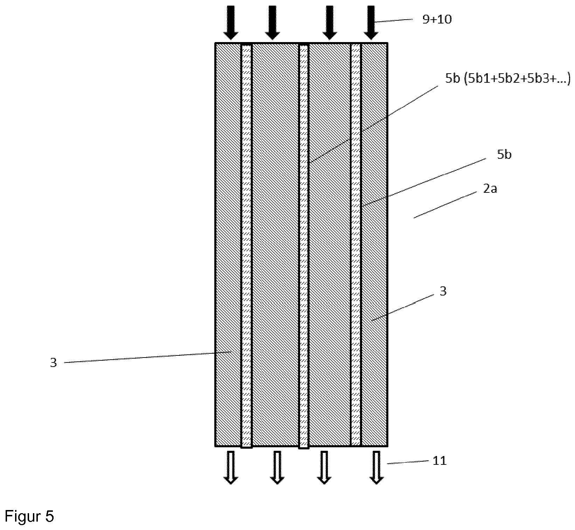

Figur 5 zeigt eine schematische Zeichnung einer weiteren Ausgestaltung des erfindungsgemäßen ersten Reaktorrohrs (2a). Innerhalb des ersten Reaktorrohrs (2a) ist ein Katalysator (3) angeordnet. Das in Figur 4 gezeigte elektrische Widerstandsheizelement (5b) ist innerhalb des Katalysators (3) angeordnet und ermöglicht eine gleichmäßigere Erwärmung des Katalysators (3) und verringert die innerhalb des ersten Reaktorrohrs (2a) auftretender Materialspannungen. Das elektrische Widerstandsheizelement (5b) kann wie in Figur 5 gezeigt als jeweils separate Elemente oder auch als verbundene, in Reihe oder parallel geschaltete, Summe von jeweils einzelnen elektrische Widerstandsheizelement (5b1+5b2+5b3+...) ausgebildet sein.

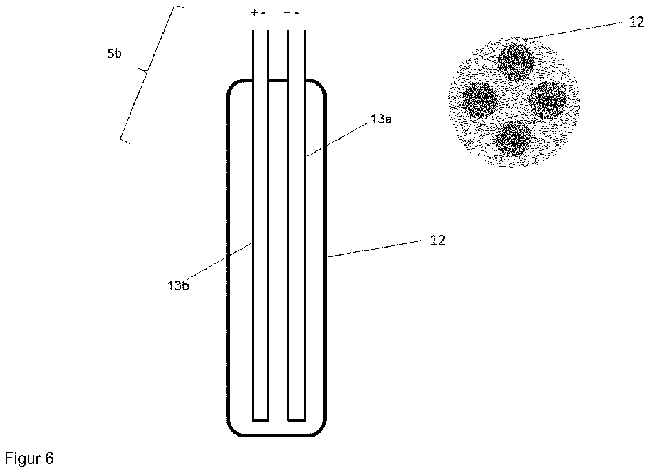

Figur 6 zeigt einen vergrößerten Ausschnitt eines bevorzugten elektrischen Widerstandsheizelements (5b). Das elektrische Widerstandsheizelement (5b) umfasst einen ersten elektrischen Heizwiderstand (13a), einen zweiten elektrischen Heizwiderstand (13b) und einen Heizmantel (12). Die elektrischen Heizwiderstände (13a/13b) können mit einer Gleichstromquelle (angedeutet durch + -) oder einer nicht gezeigten Wechselstromquelle elektrisch verbunden sein. Das elektrische Widerstandselement (5b) kann auch mehrere erste und zweite Heizwiderstände (13a/13b) umfassen. Dies ist im Kreis schematisch angedeutet. Der erste elektrische Heizwiderstand (13a) und der zweite elektrische Heizwiderstand (13b) können unterschiedlich dimensioniert sein. Hierunter fallen beispielsweise unterschiedliche Längen und Durchmesser oder auch die Anordnung der elektrischen Heizwiderstände (13a/13b) im elektrischen Widerstandsheizelement (5b). Über diese Anordnung können unterschiedliche und abstimmbare Heizleistungen des elektrischen Widerstandsheizelements (5b) erreicht werden.

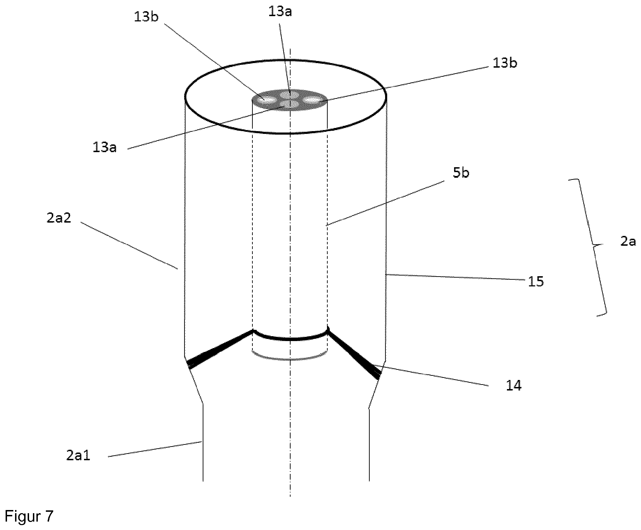

Figur 7 zeigt eine schematische Zeichnung eines bevorzugten ersten Reaktorrohrs (2a). Das elektrische Widerstandselement (5b) umfasst mehrere erste und zweite Heizwiderstände (13a/13b). Diese Heizwiderstände (13a/13b) sind bevorzugt in Bezug auf die Heizleistung unterschiedlich dimensioniert. Das elektrische Widerstandselement (5b) ist über eine elektrische Kontaktierung/mechanische Fixierung (14) im ersten Reaktorrohr (2a) angeordnet. Das erste Reaktorrohr (2a) weist im Bereich des elektrischen Widerstandselements (5b) eine Ausbuchtung (15) auf. Diese Ausbuchtungen (15) oder auch Verengungen ermöglichen eine individuell einstellbare Beheizung einzelner Abschnitte der ersten Reformerrohre (2a).

### Bezuaszeichenliste

- (1): Brennkammer
- (2a): erstes Reaktorrohr
- (2b): zweites Reaktorrohr
- (3): Katalysator
- (4): Brenner
- (5): elektrisch beheizbares Heizelement
- (5a): induktiv beheizbares Heizelement
- (5b): elektrisches Widerstandsheizelement
- (6): Heizrohr
- (7a): metallischer Draht
- (7b): metallische Beschichtung
- (8): Einkerbungen
- (8a): Kontaktfläche
- (9): kohlenwasserstoffhaltigen Ausgangsgemisch
- (10): Wasserdampf
- (11): Synthesegasgemisch
- (12): Heizmantel
- (13): elektrischer Heizwiderstand
- (13a): erster elektrischer Heizwiderstand
- (13b): zweiter elektrischer Heizwiderstand
- (13i): weitere i-ter Heizwiderstand mit i größer/gleich 3 und i (ganze Zahl) = 3, 4, 5, 6, 7, ...
- (14): elektrische Kontaktierung/mechanische Fixierung
- (15): Ausbuchtung/Verengung des ersten Reaktorrohrs

## Patentansprüche

1. Reformer zur Dampfreformierung eines kohlenwasserstoffhaltigen Gemisches mindestens umfassend:
a.) eine Brennkammer (1),
b.) einen innerhalb der Brennkammer (1) angeordneten Brenner (4);
c.) ein erstes Reaktorrohr (2a) welches mindestens abschnittsweise innerhalb der Brennkammer (1) angeordnet ist;
d.) einen innerhalb des ersten Reaktorrohrs (2a) angeordneten Katalysator (3);
**dadurch gekennzeichnet, dass** ein elektrisch beheizbares Heizelement (5) innerhalb des ersten Reaktorrohrs (2a) angeordnet ist, dass sich das elektrisch beheizbare Heizelement (5) innerhalb der Brennkammer (1) erstreckt, wobei das elektrische Heizelement (5) ein elektrisches Widerstandsheizelement (5b) umfasst.

2. Reformer nach Anspruch 1, **dadurch gekennzeichnet, dass** ein zweites Reaktorrohr (2b) mit einen innerhalb des zweiten Reaktorrohrs (2b) angeordneten Katalysator (3) ohne ein elektrisch beheizbares Heizelement (5) innerhalb des zweiten Reaktorrohrs (2b), mindestens abschnittsweise innerhalb der Brennkammer (1) angeordnet ist.

3. Reformer nach Anspruch 1 oder 2, **dadurch gekennzeichnet, dass** das erste Reformerrohr im Bereich des elektrisch beheizbaren Heizelements (5) Ausbuchtungen oder Verengungen aufweist.

4. Reformer nach einem der Ansprüche 1 bis 3, **dadurch gekennzeichnet, dass** das elektrisch beheizbare Heizelement (5) ein induktiv beheizbares Heizelement (5a) umfasst.

5. Reformer nach Anspruch 4, **dadurch gekennzeichnet, dass** das induktiv beheizbares Heizelement (5a) mindestens ein Heizrohr (6) und einen zumindest abschnittsweise um das Heizrohr (6) gewickelten metallischen Draht (7a) oder eine metallische Beschichtung (7b), bevorzugt in Form von spulenförmigen Leiterbahnen, aufweist.

6. Reformer nach Anspruch 5, **dadurch gekennzeichnet, dass** das Heizrohr (6) eine zumindest abschnittsweise metallischen Oberfläche (7c) aufweist.

7. Reformer nach Anspruch 5 oder 6, **dadurch gekennzeichnet, dass** der metallische, elektrisch leitfähige Draht (7a) über Einkerbungen (8) auf dem Heizrohr (6) anliegt.

8. Reformer nach einem der Ansprüche 5 bis 7, **dadurch gekennzeichnet, dass** das Heizrohr (6) mit dem Katalysator (3) oder einem von dem Katalysator (3) verschiedenen zweiten Katalysator gefüllt ist.

9. Reformer nach einem der Ansprüche 5 bis 8, **dadurch gekennzeichnet, dass** der Katalysator (3) innerhalb des ersten Reaktorrohr (2a) und innerhalb des Heizrohres (6) angeordnet ist.

10. Reformer nach einem der Ansprüche 5 bis 9, **dadurch gekennzeichnet, dass** das Verhältnis vom Durchmesser des ersten Reaktorrohres (2a) Ø₂ₐ zum Durchmesser des Heizrohres (6) Ø₆ ausgedrückt als Ø₂ₐ/Ø₆ bei 100 bis 2, bevorzugt 10 bis 5 liegt.

11. Reformer nach einem der Ansprüche 5 bis 10, **dadurch gekennzeichnet, dass** der metallische Draht (7a) und/oder die metallischen Oberfläche (7c) und/oder die metallische Beschichtung (7b) Eisen, Kobalt, Nickel, Kupfer, Silber, Chrom umfassen.

12. Reformer nach einem der Ansprüche 5 bis 11, **dadurch gekennzeichnet, dass** der metallischen Draht (7a) und/oder die metallische Beschichtung (7b) mit einer elektrischen Wechselstromquelle verbunden sind.

13. Reformer nach Anspruch 12, **dadurch gekennzeichnet, dass** das elektrische Widerstandsheizelement (5b) einen elektrischen Heizwiderstand (13) und einen Heizmantel (12) umfasst.

14. Reformer nach Anspruch 13, **dadurch gekennzeichnet, dass** der Heizmantel (12) elektrische Isolatoren, bevorzugt Oxidkeramiken und/oder Nichtoxidkeramiken, umfasst.

15. Reformer nach einem der Ansprüche 12 bis 14, **dadurch gekennzeichnet, dass** das elektrische Widerstandsheizelement (5b) einen ersten elektrischen Heizwiderstand (13a) und einen zweiten Heizwiderstand (13b) umfasst, bevorzugt weitere Heizwiderstände (13i) umfasst.

16. Reformer nach einem der Ansprüche 1 bis 15, **dadurch gekennzeichnet, dass** der Katalysator (3) einen ferromagnetischen Katalysator, bevorzugt Eisen, Kobalt, Nickel und/oder Verbindungen und/oder Gemische davon umfasst.

17. Anlage zur Ammoniaksynthese, Wasserstoffsynthese, Methanolsynthese und/oder als Ammoniaksynthese-Harnstoffsynthesekomplex umfassend einen Reformer nach einem der Ansprüche 1 bis 16.

18. Verfahren zur Herstellung von Synthesegas mindestens umfassend die Schritte:
a.) Bereitstellen eines kohlenwasserstoffhaltigen Ausgangsgemisches (9) und von Wasserdampf (10)
b.) Beaufschlagen eines Reformers nach einem oder mehreren der Ansprüche 1 bis 16 mit dem bereitgestellten kohlenwasserstoffhaltigen Ausgangsgemisches (9) und von Wasserdampf (10); und
c.) Erhalten eines Synthesegasgemisches (11).

19. Verfahren nach Anspruch 18, **dadurch gekennzeichnet, dass** das Beaufschlagen in Schritt b) bei einer Temperatur von 300 °C bis 700 °C und einem Druck von 20 Bar bis 50 bar erfolgt.

20. Verwendung eines Reformers nach einem der Ansprüche 1 bis 16 zur Herstellung eines Synthesegasgemisches.

## Claims

1. A reformer for the steam reforming of a hydrocarbon-containing mixture, at least comprising:
a.) a combustion chamber (1),
b.) a burner (4) disposed within the combustion chamber (1);
c.) a first reactor tube (2a) which is disposed at least sectionally within the combustion chamber (1);
d.) a catalyst (3) disposed within the first reactor tube (2a);
**characterized in that** an electrically heatable heating element (5) is disposed within the first reactor tube (2a), that the electrically heatable heating element (5) extends within the combustion chamber (1), wherein the electrical heating element (5) comprises an electrical resistance heating element (5b).

2. The reformer as claimed in claim 1, **characterized in that** a second reactor tube (2b) with a catalyst (3) disposed within the second reactor tube (2b) is disposed without an electrically heatable heating element (5) within the second reactor tube (2b) at least sectionally within the combustion chamber (1).

3. The reformer as claimed in claim 1 or 2, **characterized in that** the first reformer tube has protrusions or constrictions in the region of the electrically heatable heating element (5).

4. The reformer as claimed in any of claims 1 to 3, **characterized in that** the electrically heatable heating element (5) comprises an inductively heatable heating element (5a).

5. The reformer as claimed in claim 4, **characterized in that** the inductively heatable heating element (5a) has at least one heating tube (6) and, wound at least sectionally around the heating tube (6), a metallic wire (7a) or a metallic coating (7b), preferably in the form of coillike conductor tracks.

6. The reformer as claimed in claim 5, **characterized in that** the heating tube (6) has an at least sectionally metallic surface (7c).

7. The reformer as claimed in claim 5 or 6, **characterized in that** the metallic, electrically conductive wire (7a) lies on the heating tube (6) via notches (8).

8. The reformer as claimed in any of claims 5 to 7, **characterized in that** the heating tube (6) is filled with the catalyst (3) or with a second catalyst different from the catalyst (3).

9. The reformer as claimed in any of claims 5 to 8, **characterized in that** the catalyst (3) is disposed within the first reactor tube (2a) and within the heating tube (6).

10. The reformer as claimed in any of claims 5 to 9, **characterized in that** the ratio of the diameter of the first reactor tube (2a), 0₂ₐ, to the diameter of the heating tube (6), Ø₆, expressed as Ø₂ₐ/Ø₆, is from 100 to 2, preferably from 10 to 5.

11. The reformer as claimed in any of claims 5 to 10, **characterized in that** the metallic wire (7a) and/or the metallic surface (7c) and/or the metallic coating (7b) comprise iron, cobalt, nickel, copper, silver, chromium.

12. The reformer as claimed in any of claims 5 to 11, **characterized in that** the metallic wire (7a) and/or the metallic coating (7b) are connected to an electrical alternating current source.

13. The reformer as claimed in claim 12, **characterized in that** the electrical resistance heating element (5b) comprises an electrical heating resistor (13) and a heating jacket (12).

14. The reformer as claimed in claim 13, **characterized in that** the heating jacket (12) comprises electrical insulators, preferably oxide ceramics and/or nonoxide ceramics.

15. The reformer as claimed in any of claims 12 to 14, **characterized in that** the electrical resistance heating element (5b) comprises a first electrical heating resistor (13a) and a second heating resistor (13b), and preferably comprises further heating resistors (13i).

16. The reformer as claimed in any of claims 1 to 15, **characterized in that** the catalyst (3) comprises a ferromagnetic catalyst, preferably iron, cobalt, nickel and/or compounds and/or mixtures thereof.

17. A plant for ammonia synthesis, hydrogen synthesis, methanol synthesis and/or as an ammonia synthesis-urea synthesis complex, comprising a reformer as claimed in any of claims 1 to 16.

18. A method for producing synthesis gas, at least comprising the steps of:
a.) providing a hydrocarbon-containing starting mixture (9) and steam (10);
b.) charging a reformer as claimed in one or more of claims 1 to 16 with the provided hydrocarbon-containing starting mixture (9) and steam (10); and
c.) obtaining a synthesis gas mixture (11).

19. The method as claimed in claim 18, **characterized in that** the charging in step (b) takes place at a temperature of 300°C to 700°C under a pressure of 20 bar to 50 bar.

20. The use of a reformer as claimed in any of claims 1 to 16 for producing a synthesis gas mixture.

## Revendications

1. Reformeur pour le reformage à la vapeur d'un mélange contenant des hydrocarbures, comprenant au moins :
a.) une chambre de combustion (1),
b.) un brûleur (4) agencé à l'intérieur de la chambre de combustion (1) ;
c.) un premier tube de réacteur (2a) qui est agencé au moins par sections à l'intérieur de la chambre de combustion (1) ;
d.) un catalyseur (3) agencé à l'intérieur du premier tube de réacteur (2a) ;
**caractérisé en ce qu'un** élément chauffant (5) pouvant être chauffé électriquement est agencé à l'intérieur du premier tube de réacteur (2a), **en ce que** l'élément chauffant (5) pouvant être chauffé électriquement s'étend à l'intérieur de la chambre de combustion (1), l'élément chauffant électrique (5) comprenant un élément chauffant à résistance électrique (5b).

2. Reformeur selon la revendication 1, **caractérisé en ce qu'**un deuxième tube de réacteur (2b) avec un catalyseur (3) agencé à l'intérieur du deuxième tube de réacteur (2b) sans élément chauffant (5) pouvant être chauffé électriquement est agencé à l'intérieur du deuxième tube de réacteur (2b), au moins par sections à l'intérieur de la chambre de combustion (1).

3. Reformeur selon la revendication 1 ou 2, **caractérisé en ce que** le premier tube de reformeur présente des renflements ou des rétrécissements dans la zone de l'élément chauffant (5) pouvant être chauffé électriquement.

4. Reformeur selon l'une quelconque des revendications 1 à 3, **caractérisé en ce que** l'élément chauffant (5) pouvant être chauffé électriquement comprend un élément chauffant (5a) pouvant être chauffé par induction.

5. Reformeur selon la revendication 4, **caractérisé en ce que** l'élément chauffant (5a) pouvant être chauffé par induction comprend au moins un tube chauffant (6) et un fil métallique (7a) enroulé au moins par sections autour du tube chauffant (6) ou un revêtement métallique (7b), de préférence sous la forme de pistes conductrices en forme de bobines.

6. Reformeur selon la revendication 5, **caractérisé en ce que** le tube chauffant (6) présente une surface métallique (7c) au moins par sections.

7. Reformeur selon la revendication 5 ou 6, **caractérisé en ce que** le fil métallique électriquement conducteur (7a) s'appuie sur le tube chauffant (6) par l'intermédiaire d'encoches (8).

8. Reformeur selon l'une quelconque des revendications 5 à 7, **caractérisé en ce que** le tube chauffant (6) est rempli du catalyseur (3) ou d'un deuxième catalyseur différent du catalyseur (3).

9. Reformeur selon l'une quelconque des revendications 5 à 8, **caractérisé en ce que** le catalyseur (3) est agencé à l'intérieur du premier tube de réacteur (2a) et à l'intérieur du tube chauffant (6).

10. Reformeur selon l'une quelconque des revendications 5 à 9, **caractérisé en ce que** le rapport entre le diamètre du premier tube de réacteur (2a) Ø₂ₐ et le diamètre du tube chauffant (6) Ø₆, exprimé en tant que Ø₂ₐ/Ø₆, est de 100 à 2, de préférence de 10 à 5.

11. Reformeur selon l'une quelconque des revendications 5 à 10, **caractérisé en ce que** le fil métallique (7a) et/ou la surface métallique (7c) et/ou le revêtement métallique (7b) comprennent du fer, du cobalt, du nickel, du cuivre, de l'argent, du chrome.

12. Reformeur selon l'une quelconque des revendications 5 à 11, **caractérisé en ce que** le fil métallique (7a) et/ou le revêtement métallique (7b) sont connectés à une source de courant électrique alternatif.

13. Reformeur selon la revendication 12, **caractérisé en ce que** l'élément chauffant à résistance électrique (5b) comprend une résistance électrique chauffante (13) et une enveloppe chauffante (12).

14. Reformeur selon la revendication 13, **caractérisé en ce que** l'enveloppe chauffante (12) comprend des isolants électriques, de préférence des céramiques oxydes et/ou des céramiques non-oxydes.

15. Reformeur selon l'une quelconque des revendications 12 à 14, **caractérisé en ce que** l'élément chauffant à résistance électrique (5b) comprend une première résistance électrique chauffante (13a) et une deuxième résistance chauffante (13b), de préférence d'autres résistances chauffantes (13i).

16. Reformeur selon l'une quelconque des revendications 1 à 15, **caractérisé en ce que** le catalyseur (3) comprend un catalyseur ferromagnétique, de préférence du fer, du cobalt, du nickel et/ou des composés et/ou des mélanges de ceux-ci.

17. Installation pour la synthèse d'ammoniac, la synthèse d'hydrogène, la synthèse de méthanol et/ou en tant que complexe pour la synthèse d'ammoniac et la synthèse d'urée, comprenant un reformeur selon l'une quelconque des revendications 1 à 16.

18. Procédé de production de gaz de synthèse comprenant au moins les étapes suivantes :
a.) la fourniture d'un mélange de départ contenant des hydrocarbures (9) et de vapeur d'eau (10) ;
b.) l'alimentation d'un reformeur selon une ou plusieurs des revendications 1 à 16 avec le mélange de départ contenant des hydrocarbures (9) fourni et de la vapeur d'eau (10) ; et
c.) l'obtention d'un mélange de gaz de synthèse (11).

19. Procédé selon la revendication 18, **caractérisé en ce que** l'alimentation à l'étape b) s'effectue à une température allant de 300 °C à 700 °C et à une pression allant de 20 bar à 50 bar.

20. Utilisation d'un reformeur selon l'une quelconque des revendications 1 à 16 pour la production d'un mélange de gaz de synthèse.
